**Europäisches Patentamt**

**European Patent Office**

**Office européen des brevets**

(19)

(11) Veröffentlichungsnummer: **0 259 408**
**B1**

(12) ## EUROPÄISCHE PATENTSCHRIFT

(45) Veröffentlichungstag der Patentschrift: **01.08.90**

(21) Anmeldenummer: **87901443.9**

(22) Anmeldetag: **15.02.87**

(86) Internationale Anmeldenummer:
**PCT/EP87/00083**

(87) Internationale Veröffentlichungsnummer:
**WO 87/05003 27.08.87 Gazette 87/19**

(51) Int. Cl.⁵: **C 02 F 1/48**

(54) **ANORDNUNG ZUR BEHANDLUNG VON WASSER.**

(30) Priorität: **21.02.86 AT 462/86**

(43) Veröffentlichungstag der Anmeldung:
**16.03.88 Patentblatt 88/11**

(45) Bekanntmachung des Hinweises auf die
Patenterteilung:
**01.08.90 Patentblatt 90/31**

(84) Benannte Vertragsstaaten:
**BE CH DE FR GB IT LI NL**

(56) Entgegenhaltungen:
**WO-A-81/02846**
**DE-A-2 432 314**
**US-A-2 939 830**
**US-A-4 299 701**
**US-A-4 326 954**

(73) Patentinhaber: **MAKOVEC, Leopold**
**Kalchgruben 39**
**A-6094 Axams (AT)**

(72) Erfinder: **MAKOVEC, Leopold**
**Kalchgruben 39**
**A-6094 Axams (AT)**

(74) Vertreter: **Hefel, Herbert, Dipl.-Ing.**
**Egelseestrasse 65a Postfach 61**
**A-6800 Feldkirch (AT)**

Courier Press, Leamington Spa, England.

**Beschreibung**

Die Erfindung bezieht sich auf eine Anordnung zur Behandlung von Wasser mit einem durch einen Elektromagneten erzeugten Magnetfeld, wobei an die Außenoberfläche eines wasserführenden Rohres ein Elektromagnet mit wenigstens einer Erregerspule ansetzbar ist.

Es ist bekannt, zur Verhütung von Kalkablagerungen das Speisewasser in den wasserführenden Rohren so durch die magnetischen Kraftlinien eines Solenoids zu leiten, daß es wiederholt dessen Kraftlinien schneidet. Das magnetische Kraftfeld, durch bwelches das Speisewasser geleitet wird, verzerrt bzw. beeinflußt die Wassermoleküle, welche sich aus einem Sauerstoff- und zwei Wasserstoffatomen zusammensetzen. Durch die Magnetbeeinflussung wird aus dem jeweiligen inneren Elektronenkreis das Elektron in den äußeren Kreis gedrängt. Physikalisch gesehen wird dadurch das Atomgitter zerstört. Kalkteile werden in mikrofeinen Teilchen aufgespalten, in ihrer kristallinen Struktur verändert und verlieren somit die Eigenschaft, sich abzulagern. Dies bedeutet, daß die Kalkteile in Schwebe gehalten und mit dem Fließwasser ausgeschieden werden.

Es sind eine Reihe von Anordnungen bzw. Vorrichtungen bekannt, die in wasserführenden Rohren ein Magnetfeld aufbauen und somit das durchfließende Speisewasser entsprechend beeinflussen. In der Regel sind dies komplizierte Aufbauten, die in das Wasserleitungsnetz getrennt eingebaut werden müssen, oder aber die Erregerspulen umschließen die wasserführenden Rohre, was selbstverständlich ebenso zu umfangreichen Manipulationen im Leitungswassersystem führt.

Ferner ist es bekannt (CA—A—1 155 086), einen Permanentmagnet an der Außenseite eines Rohres zu befestigen. Der Einsatz eines Permanent-Magneten für eine derartige Anordnung ist unzweckmäßig, da durch das stets gleichbleibende Kraftfeld die Gefahr einer Leitungsverstopfung gegeben ist, zumal Eisenteilchen, die im Wasser mtigeführt werden, im Bereich des angesetzten Permanentmagneten angezogen werden. Nur durch die Anordnung eines Elektromagneten mit einer Erregerspule und somit der Möglichkeit des Anschlusses an eine pulsierende Gleichstromquelle, kann diese Verstopfungsgefahr verhindert werden. Außerdem ist die Wirkung dieses Permanentmagneten beeinträchtigt, da die Anlageoberfläche dessen tangential zur Rohroberfläche verläuft.

Bei einer weiteren bekannten Ausführung (US—A—2 939 830) wird an zwei diametral einander gegenüberliegenden Bereichen eines wasserführenden Rohres ein Abschnitt eines Elektromagneten angeordnet. Im einen Falle ist dies ein magnetisierbarer Plattenteil und im anderen Falle sind die beiden Pole des Elektromagneten an einander gegenüberliegenden Begrenzungen einer Rohrleitung vorgesehen. Bei dieser Ausbildung gehen die magnetischen Kraftlinien exakt quer zur Längserstreckung des Rohres durch dieses hindurch. Eine solche Konstruktion kann nur von vornherein für einen bestimmten Rohrdurchmesser gefertigt werden, da der Bogenverlauf der beiden an dem Rohr abgestützten Eisenkerne nicht verändert werden kann. Es wird also für jeden Durchmesser eine ganz spezielle, vorgefertigte Konstruktion eines Elektromagneten benötigt.

Die vorliegende Erfindung hat sich zur Aufgabe gestellt, eine Anordnung der eingangs genannten Art zu schaffen, durch welche es ermöglicht wird, ohne Umbauarbeiten im Wasserleitungssystem die Vorteile einer optimalen Einwirkung von Magnetfeldern auf das Fließwasser auszunützen, wobei eine einfache Anpaßbarkeit an verschiedene Durchmesser der Wasserleitungen möglich sein soll.

Die zur Lösung dieser Aufgabe vorgeschlagene Anordnung ist dadurch gekennzeichnet, daß der Elektromagnet einen U- oder E-förmigen Eisenkörper aufweist, welcher mit seinen in Rohrlängserstreckung aufeinanderfolgend frei auskragenden Stegen an einem Rohr anpreßbar ist, daß der Eisenkörper aus geschichteten Blechlamellen gebildet ist, welche relativ zueinander in Richtung der Stege verschiebbar sind, so daß die freien Enden der Stege der Obeflächenkrümmung des Rohrs anpaßbar sind, daß der Elektromagnet mittels eines diesen und das entsprechende Rohr umfassenden Spanngliedes, z.B. nach Art eines Schlauchbinders, gegen ein Rohr spannbar ist, und daß zwischen dem aus Lamellen gebildeten Eisenkörper und dem Spannglied ein elastischer Auflagestreifen eingesetzt ist.

Durch die erfindungsgemäßen Maßnahmen kann also an jeder beliebigen Stelle eines wasserführenden Rohres ein magnetisches Kraftfeld aufgebaut werden, ohne daß umfangreiche Demontage- und Montagearbeiten an den Rohrleitungen selbst ausgeführt werden müßten. Erfindungsgemäß kann also ein Elektromagnet direkt an die Oberfläche eines wasserführenden Rohres angesetzt werden, wobei durch Versuche sich ergeben hat, daß die Wirkung einer solchen Anordnung optimal ist. Durch die erfindungsgemäße Maßnahme, daß die freien Enden der Stege des Eisenkörpers der Oberflächenkrümmung des Rohres angepaßt bzw. anpaßbar sind, ist immer die Gewähr gegeben, daß kein Luftspalt zwischen den Stegen des Eisenkörpers und dem wasserführenden Rohr entsteht, so daß keine Abschwächung des magnetischen Kraftfeldes erfolgt. Erst durch diese zusätzliche Maßnahme ist es möglich geworden, ein einfaches Ansetzen eines Elektromagneten an ein wasserführendes Rohr durchzuführen.

Wenn gemäß der Erfindung der Eisenkörper aus einer Vielzahl aufeinander geschichteter Blechlamellen gefertigt ist, welche relativ zueinander in Richtung der Stege verschiebbar sind, ist es in einfacher Weise möglich, daß alle Blechlammellen im Bereich der freien Enden der Stege satt an der Oberfläche des Rohres zur Anlage kommen.

Durch ein handelsübliches Spannglied kann durch entsprechend festes Anziehen ein ausreichender Anpreßdruck der freien Enden der Stege am Rohr erreicht werden. Zu einer günstigen Lastverteilung im Bereich des Eisenkörpers und somit der Blechlamellen ist ein elastischer Auflagestreifen zwischen dem Eisenkörper und dem Spannglied eingesetzt.

Erwähnenswert sind auch die durch die erfindungsgemäße Anordnung entstandenen günstigen Anschaffungs- und Montagekosten, da nicht eigens bei der Montage das bestehende Rohrleitungssystem unterbrochen werden muß.

Weitere erfindungsgemäße Merkmale und besondere Vorteile werden in der nachstehenden Beschreibung anhand der Zeichnungen noch näher erläutert.

Es zeige:

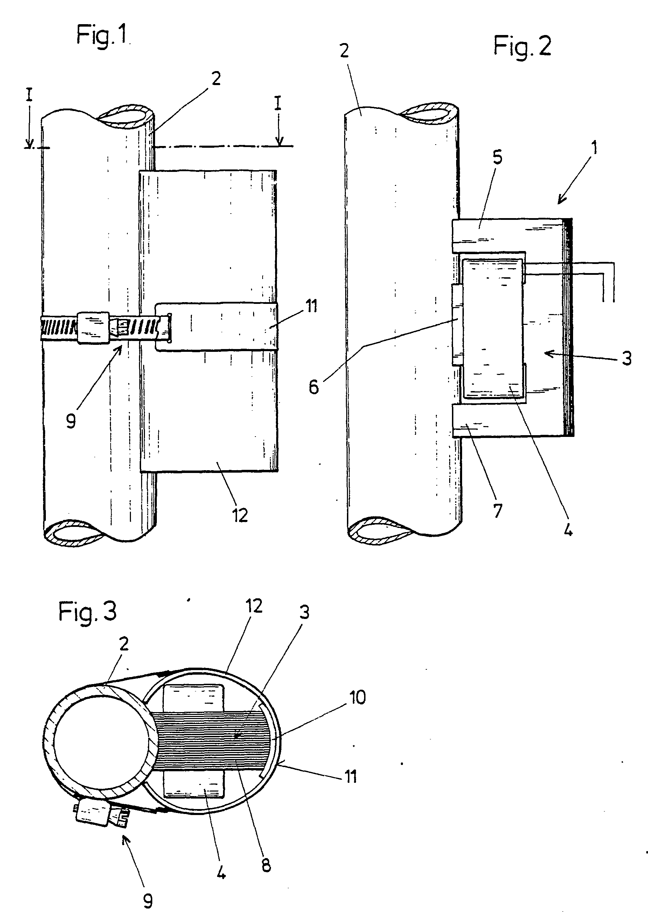

Fig. 1 eine Ansicht eines Rohres mit einer angesetzten Anordnung;

Fig. 2 die gleiche Ansicht, jedoch mit abgenommener Verspannung und abgenommenem Gehäuse;

Fig. 3 einen Schnitt nach der Linie I—I in Fig. 1;

Fig. 4 ein weiteres Ausführungsbeispiel der Erfindung.

Die erfindungsgemäße Anordnung besteht aus einem Elektromagneten 1, welcher an ein wasserführendes Rohr 2 ansetzbar ist. Es wird hier stets von einem wasserführenden Rohr 2 gesprochen. Auf die gleiche Weise kann die erfindungsgemäße Anordnung an jedem wasserführenden Teil, wie beispielsweise einem Behälter, einem wasserführenden Gerät usw. angebracht werden.

Der Elektromagnet 1 besteht aus einem E-förmigen Eisenkörper 3 und einer Erregerspule 4. Die frei auskragenden Stege 5, 6 und 7 sind an das Rohr 2 anpreßbar.

Im Rahmen der Erfindung ist es auch möglich, einen U-förmigen Eisenkörper 3 einzusetzen, wobei dann lediglich zwei Stege vorgesehen wären. Es sind aber auch Ausführungen denkbar, bei welchen mehr als drei solcher Stege 5, 6, 7 angeordnet sind, wobei dann entsprechend mehrere Erregerspulen 4 angeordnet werden müssen. Es ist auch möglich, mehrere solcher U-oder E-förmiger Eisenkörper hintereinander in Reihe anzuordnen und auf irgendeine Weise mechanisch miteinander zu verbinden. Auch ist es möglich, mehrere solcher Elektromagneten hintereinander an einem wasserführenden Rohr zu montieren oder beispielsweise winkelmäßig versetzt zueinander aufeinanderfolgend an einem Rohr 2 anzuordnen.

Ein wesentliches Merkmal liegt darin, daß die freien Enden der Stege 5, 6 und 7 der Oberflächenkrümmung des Rohres 2 angepaßt bzw. anpaßbar sind. Bei entsprechend angepaßten Ausführungen muß von vornherein festgelegt werden, für welchen Rohrdurchmesser ein bestimmter Eisenkörper 3 geeignet ist. Um hier eine einfache Anpassungsmöglichkeit an die verschiedensten Rohrdurchmesser und somit an die verschiedensten Oberflächenkrümmungen der Rohre 2 zu erreichen, ist der Eisenkörper 3 aus einer Vielzahl aufeinander geschichteter Blechlamellen 8 gefertigt, welche relativ zueinander in Richtung der Stege 5, 6, 7 verschiebbar sind. Dadurch ist es möglich, daß alle Blechlamellen im Bereich der freien Enden der Stege 5, 6 und 7 satt an der Oberfläche des Rohres 2 zur Anlage kommen. Es wird dadurch die Bildung eines Luftspaltes ausgeschlossen und somit ein ordnungsgemäßer Verlauf der magnetischen Kraftlinien im Inneren des wasserführenden Rohres 2 gewährleistet.

Die gegenseitige Verschiebung der Blechlamellen 8 des Eisenkörpers 3 kann in einfacher Weise beim Verspannen des Elektromagneten 1 mit dem wasserführenden Rohr 2 erreicht werden. Zum Verspannen des Elektromagneten 1 mit dem Rohr 2 kann ein handelsübliches Spannglied 9 eingesetzt werden, z.B. nach Art eines Schlauchbinders. Es kann dadurch durch entsprechend festes Anziehen des Spanngliedes ein ausreichender Anpreßdruck der freien Enden der Stege 5, 6 7 am Rohr 2 erreicht werden. Damit eine günstige Lastverteilung im Bereich des Eisenkörpers 3 und somit der Lamellen 8 ermöglicht wird, ist ein elastischer Auflagestreifen 10 zwischen den Eisenkörper 3 und einen beispielsweise bandförmigen Teil 11 des Spanngliedes 9 eingesetzt.

Der Elektromagnet 1 ist zweckmäßig von einem Gehäuse 12 abgedeckt, welches auch den Auflagestreifen 10 übergreift und lediglich an der Anlageseite der Stege 5, 6, 7 offen ist. Der den Elektromagneten 1 aufweisende Teil kann daher von außen her geschützt werden, so daß keine zusätzlichen Isolations- und Schutzmaßnahmen erforderlich sind. Dieses Gehäuse 12 kann auch stirnseitig durch entsprechende Abdeckteile verschlossen sein, wobei durch eine entsprechende Öffnung die Anschlußleitung nach außen geführt werden kann.

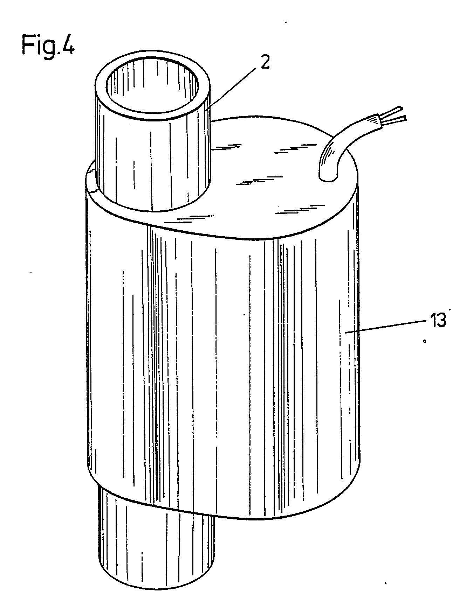

Bei der Ausführung nach Fig. 4 wird der Elektromagnet nach dem Verspannen mit dem Rohr 2 in einen blockförmigen Schutzkörper 13 eingegossen. Es ist dadurch eine ausgezeichnete Isolierung der Teile möglich und eine unverrückbare Halterung der Anordnung an dem Rohr 2. Durch Anordnung eines entsprechenden Formkörpers kann beispielsweise dieser Schutzkörper 13 an Ort und Stelle durch Ausschäumen der Form hergestellt werden.

In diesem Zusammenhang ist es auch möglich, eine solche Anordnung getrennt zu fertigen, wobei dann in diesen blockförmigen Schutzkörper 13 ein kurzes Rohrstück 2 mit entsprechenden Anschließenden miteingegossen wird. Eine solche Anordnung ist insbesondere dann zweckmäßig, wenn eine Neuinstallation eines Wasserleitungsnetzes in Frage kommt. In einem solchen Falle wird zweckmäßig dieses Rohrstück 2 aus einem nicht magnetisierbaren Material, z.B. Aluminium gefertigt.

Der Spulenkörper 4 des Elektromagneten ist an eine pulsierende Gleichstromquelle angeschlossen, wobei zu diesem Zweck eine entsprechende Diode eingesetzt ist. Dieser pulsierende Gleichstrom verhindert eine Verstopfung des Leitungssystems durch angezogene Eisenteilchen.

Durch die an Oberflächenrümmungen anpaßbare Ausführung der Stege des Eisenkörpers ist die erfindungsgemäße Anordnung auch optimal zur anpassungsfähigen Anlage an Körperteile von Menschen und Tieren geeignet. Es hat sich bereits seit vielen Jahren gezeigt, daß ein Elektromagnetfeld zur Förderung von Heilungsprozessen beiträgt, und zwar besonders bei Knochenbrüchen. Durch die Anpassungsmöglichkeit an die Oberflächenform wird dieser Heilungseffekt noch weiter verstärkt.

**Patentansprüche**

1. Anordnung zur Behandlung von Wasser mit einem durch einen Elektromagneten erzeugten Magnetfeld, wobei an die Außenoberfläche eines wasserführenden Rohres ein Elektromagnet mit wenigstens einer Erregerspule ansetzbar ist, dadurch gekennzeichnet, daß der Elektromagnet einen U- oder E-förmigen Eisenkörper (3) aufweist, welcher mit seinen in Rohrlängserstreckung aufeinanderfolgend frei auskragenden Stegen (5, 6, 7) an einem Rohr (2) anpreßbar ist, daß der Eisenkörper (3) aus geschichteten Blechlamellen (8) gebildet ist, welche relativ zueinander in Richtung der Stege (5, 6, 7) verschiebbar sind, so daß die freien Enden der Stege (5, 6, 7) der Oberflächenkrümmung des Rohres (23) anpaßbar sind, daß der Elektromagnet (1) mittels eines diesen und das entsprechende Rohr (2) umfassenden Spanngliedes (9), z.B. nach Art eines Schlauchbinders, gegen ein Rohr (2) spannbar ist, und daß zwischen dem aus Lamellen (8) gebildeten Eisenkörper (3) und dem Spannglied (9) ein elastischer Auflagestreifen (10) eingesetzt ist.

2. Anordnung nach Anspruch 1, dadurch gekennzeichnet, daß der Elektromagnet (1) samt Auflagestreifen (10) von einem an der Anlageseite der Stege (5, 6, 7) offenen Gehäuse (12) abgedeckt ist.

3. Anordnung nach Anspruch 1 und 2, dadurch gekennzeichnet, daß das Spannglied (9) das Gehäuse (12) und das Rohr (2) umfaßt, wobei der Auflagestrreifen (10) zwischen dem Eisenkörper und dem Gehäuse (12) eingesetzt ist.

4. Anordnung nach Anspruch 1, dadurch gekennzeichnet, daß der Elektromagnet (1) in mit einem Rohr (2) verspannten Zustand in einen blockförmigen Schutzkörper (13) eingegossen ist.

5. Anordnung nach Anspruch 4, dadurch gekennzeichnet, daß in den blockförmigen Schutzkörper (13) ein kurzes Rohrstück (2) mit Anschlußenden an ein Leitungssystem eingegossen is (Fig. 4).

6. Anordnung nach Anspruch 5, dadurch gekennzeichnet, daß ein Rohrstück (2) aus nicht magnetisierbarem Material, z.B. Aluminium, in den blockförmigen Schutzkörper (13) miteingegossen ist.

7. Anordnung nach Anspruch 1, dadurch gekennzeichnet, daß der Spulenkörper (4) an eine pulsierende Gleichstromquelle angeschlossen ist.

**Revendications**

1. Dispositif pour le traitement de l'eau par un champ magnétique produit par un électro-aimant, dans lequel un électro-aimant avec au moins une bobine d'induction peut être disposé sur la surface extérieure d'une conduite d'eau, caractérisé en ce que l'électro-aimant est constitué d'un corps en fer (3) en forme de U ou de E, dont les branches (5, 6, 7) libres en saillie successives dans la direction longitudinale de la conduite peuvent être pressées contre la conduite (2), en ce que le corps en fer (3) est formé de lamelles stratifiées en tôle, qui sont mobiles relativement l'une à l'autre dans la direction des branches (5, 6, 7) de manière que les extrémités libres des branches (5, 6, 7) peuvent s'adapter à la courbure de la surface de la conduite (2), en ce que l'électro-aimant (1) peut être serré contre la conduite (2) au moyen d'un élément de serrage (9) enveloppant celui-ci et la conduite correspondante (2), par exemple à la manière d'un lien pour tuyau flexible, et en ce qu'une languette de support (10) élastique est placée entre le corps en fer (3) formé de lamelles (8) et l'élément de serrage (9).

2. Dispositif selon la revendication 1 caractérisé en ce que l'électro-aimant (1) avec la languette de support (10) sont recouverts d'un boîtier (12) ouvert du côté de la butée des branches (5, 6, 7).

3. Dispositif selon selon la revendication 1 ou 2 caractérisé en ce que l'élément de serrage (9) enveloppe le boîtier (12) et la conduite (2), la languette de support (10) étant disposée entre le corps en fer (3) et le boîtier (12).

4. Dispositif selon la revendication 1 caractérisé en ce que l'électro-aimant (1) est coulé dans un corps de protection (13) en forme de bloc à l'état haubané sur une conduite (2).

5. Dispositif selon la revendication 4 caractérisé en ce qu'une courte partie de la condutie (2) est coulée avec ses extrémités de raccordement à un système de conduction, dans le corps de protection (13) en forme de bloc (figure 4).

6. Dispositif selon la revendication 5 caractérisé en ce qu'une partie de conduite (2) en un matériau non-magnétique par exemple de l'aluminium est coulée également danns le corps de protection (13) enn forme de bloc.

7. Dispositif selon la revendication 1 caractérisé en ce que le corps en forme de bobine (4) est raccordé à une source de courant continu pulsé.

**Claims**

1. An arrangement for the treatment of water with a magnetic field produced by an electromagnet, with which arrangement an electromagnet with at least one exciting coil is fastenable to the outer surface of a water-conveying pipe, characterized in that the electromagnet has a U-shaped or E-shaped iron-body (3) which can bear on a pipe (2) by means of its legs (5, 6, 7) which project freely one after another along the longitudinal extent of the pipe, in that the iron body (3) is formed from stacked sheets of metal (8), which sheets are displaceable in relation to one another in the direction of the legs (5, 6, 7) so that the free ends of the legs (5, 6, 7) are adaptable to the curvature of the surface of the pipe (2), in that the electromagnet (1) can be clamped against a pipe (2) by means of a clamping element (9), e.g. such as a hose clamp, which embraces the electromagnet and the corresponding pipe (2), and in that an elastic bearing-strip is positioned between the iron body (3) formed from sheets (8) and the clamping member (9).

2. An arrangement in accordance with Claim 1, characterized in that the electromagnet (1) and the bearing strip (10) are covered by a housing (12) which is open at the contact-side of the legs (5, 6, 7).

3. An arrangement in accordance with Claims 1 and 2, characterized in that the clamping member (9) embraces the housing (12) and the pipe (2), the bearing strip (10) being inserted between the iron body (3) and the housing (12).

4. An arrangement in accordance with Claim 1, characterized in that the electromagnet (1), clamped to a pipe (2), is cast in a block-shaped protective body (13).

5. An arrangement in accordance with Claim 4, characterized in that a short piece of pipe (2) with connection ends to a line system is cast in the block-shaped protective body (13) (Fig. 4).

6. An arrangement in accordance with Claim 5, characterized in that a piece of pipe (2) made from a non-magnetizable material, e.g. aluminium, is cast at the same time in the block-shaped protective body (13).

7. An arrangement in accordance with Claim 1, characterized in that the coil shell (4) is connected to a pulsating direct-current source.

Fig.1

Fig. 2

Fig. 3

1

Fig.4